# EUROPEAN PATENT APPLICATION

(11) **EP 1 347 544 A1**
(43) Date of publication of application: **24.09.2003**
(21) Application number: 02026682.1
(22) Date of filing: 29.11.2002
(51) Int. Cl.: H01S 3/067, H04B 10/17

(54) **Gain flattening optical fiber amplifier**

(30) Priority: 19.03.2002 KR 2002014743
(71) Applicant: SAMSUNG ELECTRONICS CO., LTD., Suwon-City, Kyungki-do (KR)
(72) Inventor: Hwang, Seong-Taek, Paldal-gu, Suwon-city, Kyungki-do (KR)
(74) Representative: Grünecker, Kinkeldey, Stockmair & Schwanhäusser Anwaltssozietät

(57) **Abstract**

Disclosed is a gain-flattening optical-fiber amplifier (200), including a circulator (231) for receiving optical signals through a first port, the signals being amplified by a predetermined amplifier (210) are outputted to a second port, and for receiving the optical signals traveling in a reverse direction through the second port to a third port; a reflector (235) for reflecting the optical signals that are outputted through the second port of the circulator and for redirecting the signals back to the circulator; and, a gain-flattening filter (233) disposed between the circulator (231) and the reflector (235) for flattening the gain of the optical signals outputted from the second port of the circulator as well as the optical signals redirected back to the circulator.

## Description

The present invention generally relates to an optical communication system and, in particular, to an optical-fiber amplifier disposed on an optical transmission line between the optical transmission block and the optical receiving block of the optical communication system.

An optical-fiber amplifier used in the optical communication system is used for amplifying optical signals that are transmitted along the fiber. During amplification, optical signals are amplified without the need for parts for converting the optical signals photoelectrically. Hence, the amplifier has a very simple structure that is also economical. The optical-fiber amplifier typically comprises a rare-earth element doped fiber; a pumping laser for generating pumping light; an optical coupler for combining the transmitted optical signals to the pumping light and for providing the same to the rare-earth element doped fiber; and an optical isolator.

The rare-earth element contained in the optical fiber is one of Er (erbium), Pr (praseodymium), or Yb (ytterbium), and optical amplification using the rare-earth element doped fiber is achieved using a stimulated emission procedure. In particular, the pumping light provided by the pumping laser pumps the ionic rare-earth elements that are included in the rare-earth element doped fiber, and the optical signals incident to the rare-earth element doped fiber are amplified through the stimulated emission procedure of the pumped ion. Currently, a WDM (Wavelength Division Multiplexing) transmission system, which is one of the methods being widely used in the optical communication system, uses 1550nm wavelength band (approximately 1530 to 1550nm) as a signal band. In this type of transmission, an erbium-doped fiber amplifier is preferred for amplifying the 1550nm band optical signals.

Recent development of WDM (Wavelength Division Multiplexing) technology now enables the transmission of optical signals composed of a plurality of wavelengths via a single transmission line. For a long-distance transmission, more optical-fiber amplifiers are installed onto the optical transmission lines to reduce the attenuation effect. However, the degrees of amplification of the erbium-doped fiber amplifier vary for different wavelengths of optical signals. If the degree of amplification of the optical signals is different depending on optical signals, an output signal level, despite the same input signal level, can be different. This means that in some cases, a receiving end can not detect signals from every channel. In addition, when a plurality of optical-fiber amplifiers is involved, the output signal-level deviation of the optical signals arrived at the receiving side becomes more severe. To prevent this problem, the optical-fiber amplifier is equipped with a gain-flattening device.

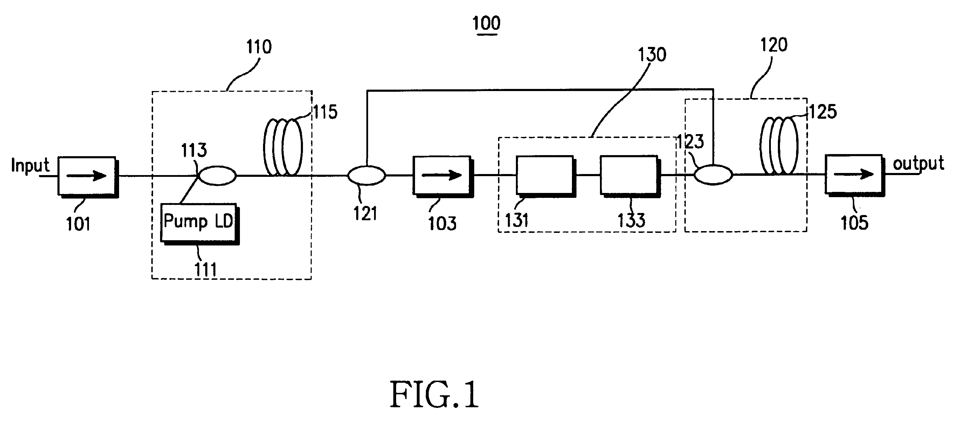

Figure 1 is the configuration diagram of a gain-flattening fiber amplifier 100 in accordance with the prior art. As shown in the drawing, the fiber amplifier of the related art includes the first and the second amplification blocks 110 and 120, and a gain-flattening device 130 that is placed between the first and the second amplification blocks 110 and 120.

The first amplification block 110 amplifies incoming optical signals that are in progress and includes a first pumping light source 111, a first WSC (Wavelength Selective Coupler) 113, which combines the pumping light outputted from the first pumping light source 111 with the inputted optical signals, and a first EDF (Erbium Doped Fiber) 115, which is pumped by the pumping light inputted through the first WSC 113 to amplify the optical signals and to output the amplified signals. For the pumping light source, a laser diode that outputs pumping lights with a wavelength in the range of from 980nm to 1480nm is used.

The gain-flattening device 130 has two serially connected gain-flattening filters 131 and 133 for equalizing the gains of optical signals outputted from the first amplification block 110. The commonly used gain-flattening filter 131 and 133 are an optical-fiber grid filter or dielectric filter. However, the dielectric filter is preferred because the optical-fiber grid filter tends to show inconsistency in the characteristics against any changes in temperature or humidity.

Normally, the amplification deviation of optical signals according to the wavelength of a typical fiber amplifier is approximately 5 to 6dB. To address the amplification deviation problem, a gain-flattening filter having the insertion loss width at 5 to 6dB per wavelength is inserted to an amplification output end. This occurrence, however, lowers the amplification efficiency of the fiber amplifier as the equalization is achieved by decreasing the intensity of the amplified optical signals. Therefore, in order to improve the amplification efficiency of the fiber amplifier, two fiber amplifiers are used, and a gain-flattening filter having a higher than 7dB of the insertion loss width per wavelength is placed between those two amplifiers. Due to the limited coating techniques, it is a difficult task to manufacture a dielectric filter having the loss width per wavelength higher than 7dB. As an alternative, two gain-flattening filters 131 and 133 are connected in series, as shown in FIG. 1, to increase the total loss width, which consequently secures the gain-equalization rate of optical signals per wavelength.

The second amplification block 120 amplifies optical signals traveling through the gain-flattening device 130 and outputs the amplified signals. Here, the second amplifier 120 may include a separate pumping light source to generate pumping lights just like the first amplification block 110. As shown in FIG. 1, the pumping lights for the second amplification block 120 are recycled, obtained by separating the remainder pumping lights from amplification signals that are outputted from the first amplification block 110 through the second wavelength selective coupler 121. These remainder pumping lights separated from the second wavelength selective coupler 121 and the optical signals outputted from the gain-flattening device 130 are combined together through the third wavelength selective coupler 123, then inputted to the second erbium-doped fiber 125. The second erbium-doped fiber 125 amplifies inputted optical signals that are pumped by the pumping light and inputted through the third wavelength selective coupler 123, and finally outputs the amplified signals to an optical transmission line.

Meanwhile, the first, second, and third optical isolators 101, 103 and 105 are installed at the input end of the first amplification block 110, between the first amplification block 110 and the gain-flattening device 130, and the output end of the second amplification block 120, respectively, to block the light signals that progress in a reverse direction of the optical-signal progress direction or ASE (Amplified Spontaneous emission). Especially, the ASE, being generated in the second amplification block 120 and progressing to the first amplification block 110, can distort the optical signals that are amplified at the first amplification block 110. In addition, the ASE generated in the first amplification block 110 might distort any optical signals on the light transmission line, as it progresses backward to the optical-signal transmission direction. Therefore, the first through the third optical isolators 101, 103 and 105 are necessary to prevent the distortion of optical signals of the gain-flattening fiber amplifier 100. However, in order to secure a flattening rate, the optical-fiber amplifier in the related art uses two dielectric filters as a gain-flattening filter, and as its a result the number of optical elements is increased which also increases the manufacturing and product costs.

It is the object of the invention to provide a gain-flattening optical-fiber amplifier and method, which reduce the manufacturing costs and product costs of the optical-fiber amplifier, by decreasing the number of gain-flattening filters.

This object is solved by the invention as claimed in the independent claims.

Preferred embodiments are defined in the dependent claims.

According to one aspect of the invention, a gain-flattening optical-fiber amplifier is provided and includes: a gain-flattening device mounted with a circulator for receiving optical signals through a first port, the signals being amplified by a predetermined amplifier and the amplified optical signals are outputted to a second port, and for redirecting the optical signals outputted through the second port and outputting the optical signals to a third port; a reflector for reflecting the optical signals that are outputted through the second port of the circulator and for redirecting the signals to the circulator, and a gain-flattening filter between the circulator and the reflector for flattening the gain of the optical signals outputted from the second port of the circulator and the optical signals redirected into the circulator; and, an amplification block for amplifying optical signals that are outputted from the third port of the circulator.

Another aspect of the present invention provides a gain-flattening optical-fiber amplifier, including: a gain-flattening device mounted with a circulator for receiving optical signals through a first port, the signals being amplified by a predetermined amplifier and the amplified optical signals are outputted to a second port, and for receiving the optical signals outputting the second port in a reverse direction and outputting the optical signals to a third port; a reflector for reflecting the optical signals that are outputted through the second port of the circulator and for redirecting the signals to the circulator; a gain-flattening filter between the circulator and the reflector for flattening the gain of the optical signals outputted from the second port of the circulator and the optical signals redirected into the circulator; and, an amplification block between the circulator and the gain-flattening filter for amplifying optical signals.

The above features and advantages of the present invention will become more apparent from the following detailed description when taken in conjunction with the accompanying drawings in which:
FIG. 1 is a diagram illustrating a gain-flattening optical-fiber amplifier in accordance with one embodiment of the related art;
FIG. 2 is a diagram illustrating a gain-flattening optical-fiber amplifier in accordance with a first preferred embodiment of the present invention;
FIG. 3 is a diagram illustrating a gain-flattening optical-fiber amplifier in accordance with a second preferred embodiment of the present invention; and,
FIG. 4 is a diagram illustrating a gain-flattening optical-fiber amplifier in accordance with a third preferred embodiment of the present invention.

Preferred embodiments of the present invention will be described herein below with reference to the accompanying drawings. For the purpose of clarity and simplicity, well-known functions or constructions are not described in detail as they would obscure the invention in unnecessary detail.

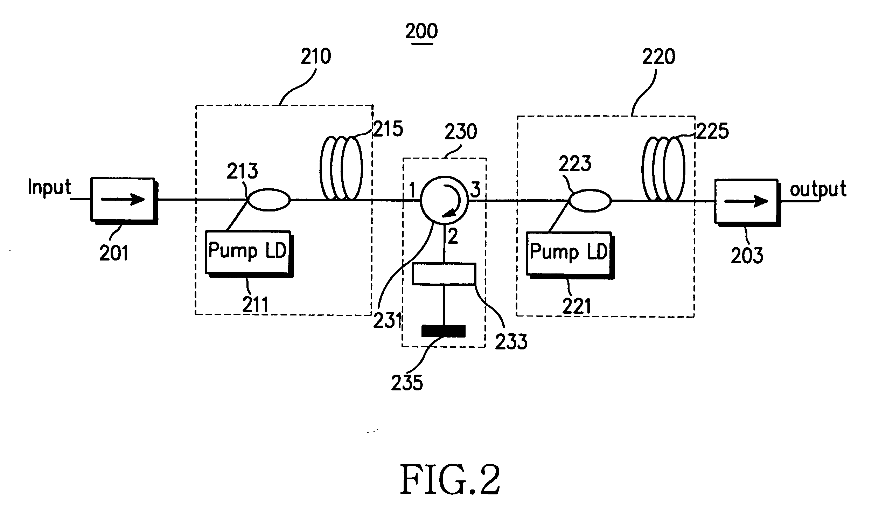

Figure 2 shows a diagram of the gain-flattening optical-fiber amplifier 200 in accordance with a first preferred embodiment of the present invention. As depicted in the diagram, the gain-flattening, optical-fiber amplifier 200 includes first and second amplification blocks 210 and 220, and a gain-flattening device 230 disposed between the first and the second amplification blocks 210 and 220.

The first amplification block 210 includes a first pumping light source 211 for generating pumping light; a first wavelength selective coupler 213 for coupling optical signals in progress with the pumping light; and a first erbium-doped fiber 215 for amplifying optical signals that are inputted after being pumped by the pumping light through the first wavelength selective coupler 213, and for outputting the amplified optical signals. The amplified optical signals being outputted through the first erbium-doped fiber 215 are inputted into the gain-flattening device 230. Here, a first optical isolator 201 is installed at an input end of the first amplification block 210 in order to block any reverse flowing ASE from the first amplification block 210.

The gain-flattening device 230 includes a circulator 231 for receiving optical signals through a first port, wherein the signals amplified by the first amplification block 210 are outputted to a second port. The circulator 231 also receives the gain-flattening optical signals outputted through the second port and outputs these optical signals to a third port. The device 230 further includes a reflector 231 for reflecting the optical signals that are outputted through the second port of the circulator 231 and for redirecting these signals to the circulator 231, and a gain-flattening filter 233 disposed between the circulator 231 and the reflector 235 for flattening the gain of the optical signals outputted from the second port of the circulator 231 as well as the optical signals redirected back into the circulator 231. Thus, the optical signals that are initially inputted to the circulator 231 are outputted through the second port, then gain-flattened through the gain-flattening filter 233. Thereafter, the optical signals are reflected by the reflector 235 and are reapplied to the circulator 231 via the gain-flattening filter 233. As such, the optical signals are gain-flattened twice using only one gain-flattening filter. Note that the circulator 231 also acts as an optical isolator for blocking the reverse-flowing ASE from the second amplification block 220 to the first amplification block 210.

The second amplification block 220 includes a second pumping light source 221 for generating pumping light, a second wavelength selective coupler 223 for coupling the flattened optical signals outputted from the gain-flattening device 230 with the pumping light generated by the second pumping light source 221, and a second erbium-doped fiber 225 for amplifying optical signals that are inputted after being pumped by the pumping light through the second wavelength selective coupler 223 and for outputting the amplified optical signals. Here, a second optical isolator 203 is installed at the output-end side where the optical signals from the second amplification block 220 are outputted, thus keeping the optical signals outputted from the second amplification block 220 from being reflected back to the second amplification block 220 in a reverse direction. As for the pumping light source of the second amplification block 220, the pumping light could be separated from the optical signals outputted from the first amplification block 210 and the pumping light through a separate wavelength selective coupler (not shown), then inputted to the second wavelength selective coupler 223. Therefore, the gain-flattening, fiber amplifier 200 allows optical signals to pass through the gain-flattening filter 233 twice due to the reflection of the optical signals in a reverse direction by the reflector 235.

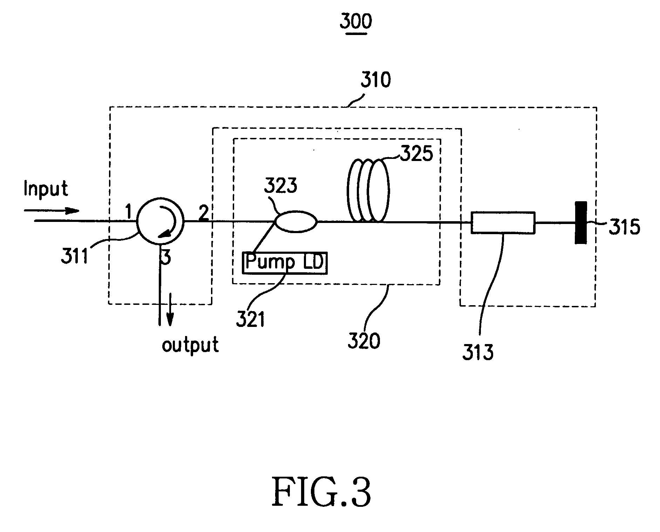

FIG. 3 shows a diagram of the gain-flattening optical-fiber amplifier 300 in accordance with a second preferred embodiment of the present invention. As illustrated in the drawing, the gain-flattening optical-fiber amplifier 300 includes a gain-flattening device 310 and an amplification block 320.

The gain-flattening device 310 includes a circulator 311 for receiving optical signals in progress through a first port and outputting the signals to the second port, and for forwarding the amplified and gain-flattened optical signals that are outputted through the second port to a third port; a reflector 315 for reflecting the optical signals that are outputted through the second port of the circulator 311 and redirecting the reflected signals back to the circulator 311; and, a gain-flattening filter 313 disposed between the circulator 311 and the reflector 315 for flattening the gain of the optical signals that are outputted from the second port of the circulator 311 and redirecting these optical signals back to the circulator 311. The amplification block 320 of the gain-flattening optical-fiber amplifier 300 is located between the circulator 311 and the gain-flattening filter 313. As such, the optical signals that are inputted through the first port of the circulator 311 are outputted through the second port and are amplified by the amplification block 320, then inputted to the gain-flattening filter 313 to be flattened. After that, the flattened signals are reflected by the reflector 315 and go through the gain-flattening and amplification while progressing to the gain-flattening filter 313 and the amplifier 320. Note that the signals are redirected back to the circulator 311 and outputted at the output end through the third port of the circulator 311. The circulator 311 acts as an optical isolator for blocking the reverse-flowing ASE from the amplification block 320 to the optical transmission line on the first port side, and the reverse-flowing ASE from the optical transmission line on the third port side of the circulator 311 to the amplification block 320.

The amplification block 320 includes a pumping light source 320 for generating pumping light, a wavelength selective coupler 323 for coupling optical signals that are outputted through the second port of the circulator 311 with the pumping light generated from the pumping light source 321, and an erbium-doped fiber 325 for amplifying the optical signals after being pumped by the pumping light that has been inputted through the wavelength selective coupler 323. The optical signals that are amplified through the erbium-doped fiber 325 are flattened while passing through the gain-flattening filter 313, then reflected back by the reflector 325. The signals pass through the gain-flattening filter 313 and the amplification block 320 to be gain-flattened and amplified, respectively, and later these signals are redirected back to the circulator 311. Accordingly, the inventive gain-flattening, fiber amplifier 300 enables the signals to pass through the amplification block 320 and the flattening filter 313 twice using the reflector 315.

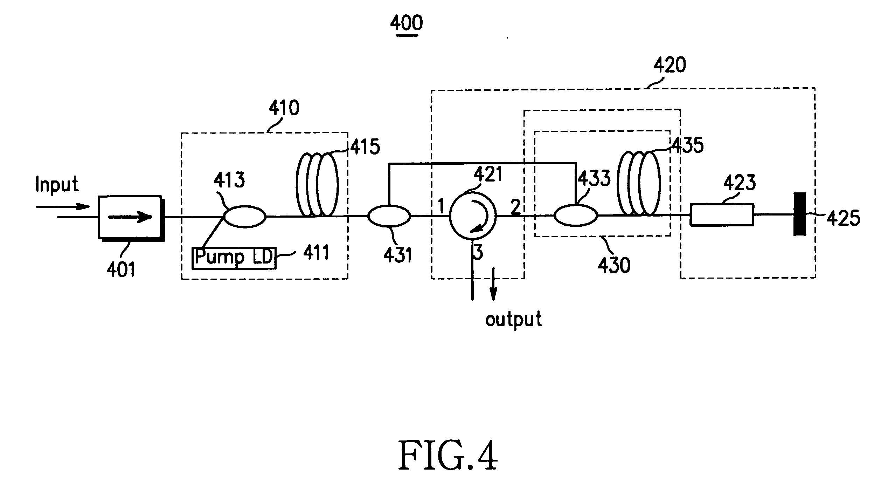

Figure 4 shows a diagram of the gain-flattening optical-fiber amplifier in accordance with a third preferred embodiment of the present invention. As shown in the drawing, the gain-flattening optical-fiber amplifier 400 includes a first amplification block 410, a gain-flattening device 420, and a second amplification block 430.

The first amplification block 410 includes a first pumping light source 411 for generating pumping light, a first wavelength selective coupler 413 for coupling the inputted optical signals with the pumping light generated from the first pumping light source 411, and a first erbium-doped fiber 415 for amplifying the optical fibers after being pumped by the pumping light, which is inputted through the first wavelength selective coupler 413. The optical signals that are outputted through the first erbium-doped fiber 415 are inputted into the gain-flattened device 420. Note that the first optical isolator 401 is installed at the input end of the first amplification block 410 in order to block any reverse-flowing ASE from the first amplification block 410.

The gain-flattening device 420 includes a circulator 421 for receiving optical signals amplified by the first amplification 410 through a first port and outputting the amplified optical signals to a second port, and for receiving the gain-flattening, optical signals outputted from the second port and outputting them to a third port; a reflector 425 for reflecting the optical signals that are outputted through the second port of the circulator 421 back to the circulator 421; a gain-flattening filter 423 disposed between the circulator 421 and the reflector 425 for flattening the gain of the optical signals outputted from the second port of the circulator 421 as well as the optical signals redirected back to the circulator 421; and, a second amplification block 430 disposed between the circulator 421 and the gain-flattening filter 423 for amplifying the optical signals. The optical signals that are inputted through the first port of the circulator 421 are outputted through the second port and amplified by the second amplification block 430.. Then, after the signals are inputted to the gain-flattened filter 423 to be flattened, the signals are reflected by the reflector 425 and forwarded back to the gain-flattened filter 423 and the second amplification block 430 for another flattening and amplification processes. These flattened and amplified signals are finally reapplied back to the circulator 421 and outputted through the third port of the circulator 421. The circulator 421 acts as an optical isolator, blocking the ASE that is reverse-flowing from the second amplification block 430 to the first amplification block 410 through the first port, and blocking the optical signals or the ASE that is reverse-flowing from the optical transmission line on the third port side to the second amplification block 430.

The second amplification block 430 includes a third wavelength selective coupler 433 for providing pumping light and a second erbium-doped fiber 435. Although the second amplification block 430 having a similar configuration as the first amplification block 410 may have a separate pumping light source for pumping the second erbium-doped fiber 435 The pumping light for the second amplification block 430 is obtained by separating the remaining pumping light, after the amplification process performed by the first amplification block 410, at the output end of the first amplification block 410 by using the second wavelength selective coupler 431. Then, the separated light is inputted to the third wavelength selective coupler 433. The second erbium-doped fiber 435 is pumped by the pumping light that is inputted through the third wavelength selective coupler 433, and the amplified optical signals are inputted to the gain-flattened filter 423. In addition, the second amplification block 430 amplifies the optical signals that have been reflected by the reflector 425 in a reverse direction through the gain-flattened filter 423, and redirects them back to the circulator 421.

Such structured gain-flattening optical-fiber amplifier 400 makes possible for one amplification block 430 and one gain-flattening filter 423 to act as two amplification blocks and two gain-flattening filters as the optical signals that are outputted through the second port of the circulator 421 reflected by the reflector 425, thus allowing the signals to go under the second amplification block 430 and the gain-flattening filter 423 twice during the operation.

In summary, the gain-flattening, optical-fiber amplifier according to the present invention has a gain-flattening filter disposed between the optical circulator and the reflector, through which one dielectric filter is sufficient to serve as a gain-flattening filter to improve the reliability and gain-flattening rate of the amplifier compared to the conventional optical-fiber amplifier where two dielectric filters were used as the gain-flattening filter. Moreover, when an amplification block is additionally installed between the optical circulator and the reflector -- that is, one gain-flatting filter and one amplification block between the optical circulator and the reflector -- its effect is doubled as if two gain-flattening filter and amplification blocks were installed. Therefore, the present invention is advantageous in the economic sense in that the gain-flattening, optical-fiber amplifier enhances the reliability of the amplifier.

## Claims

1. A gain-flattening, optical-fiber amplifier, comprising:
a first amplification block (210) for amplifying input optical signals;
a gain-flattening block (230) coupled to receive output signals from the first amplification block;
said gain-flattening block comprising a circulator (231) having a first port, a second port, and a third port for receiving optical signals via the first port, for outputting the amplified input optical signals via the second port, and for redirecting optical signals traveling in a reverse direction to the third port; a reflector (235) for reflecting optical signals outputted from the second port back to the circulator; and a gain-flattening filter (233) disposed between the circulator and the reflector for flattening the gain of the optical signals outputted from the second port of the circulator and the optical signals traveling in a reverse direction; and
a second amplification block (220) for amplifying optical signals outputted from the third port of the circulator.

2. The amplifier of Claim 1, wherein the first amplification block further comprises a first pumping light source (211), a first wavelength coupler (213) for combining output from the first pumping light source with the input optical signals, and a first erbium-doped fiber (215) for amplifying the combined output.

3. The amplifier of Claim 2, wherein the first pumping light source comprises a laser diode that outputs pumping light having a wavelength ranging from 980nm to 1480nm.

4. The amplifier of one of Claims 1 to 3, wherein the second amplification block further comprises a second pumping light source (221), a second wavelength coupler (223) for combining output from the second pumping light source with the input optical signals, and a second erbium-doped fiber (225) for amplifying the combined output.

5. The amplifier of Claim 4, wherein the second pumping light source comprises a laser diode that outputs pumping light having a wavelength ranging from 980nm to 1480nm.

6. A gain-flattening, optical-fiber amplifier, comprising:
a gain-flattening block (310, 420) for receiving amplified optical signals;
said gain-flattening block comprising a circulator (311, 421) having a first port, a second port, and a third port for receiving optical signals via the first port, for outputting the amplified input optical signals via the second port, and for redirecting optical signals traveling in a reverse direction to the third port; a reflector (315, 425) for reflecting optical signals outputted from the second port back to the circulator; and a gain-flattening filter (313, 423) disposed between the circulator and the reflector for flattening the gain of the optical signals outputted from the second port of the circulator and the optical signals traveling in a reverse direction; and
an amplification block (320, 410) disposed between the circulator and the gain-flattening filter for amplifying optical signals received thereon.

7. The amplifier of Claim 6, wherein the amplification block further comprises a pumping light source (321), a wavelength coupler (323) for combining output from the pumping light source with input optical signals, and an erbium-doped fiber (325) for amplifying the combined output to produce the amplified optical signals.

8. The amplifier of Claim 7, wherein the pumping light source comprises a laser diode that outputs pumping light having a wavelength ranging from 980nm to 1480nm.

9. A method of operating a gain-flattening, optical-fiber amplifier, the method comprising:
receiving optical signals at a first port of a circulator;
outputting the received signals at a second port of said circulator;
reflecting optical signals outputted from the second port back to the circulator by means of a reflector; and
redirecting the reflected optical signals to a third port of said circulator,
wherein the method further comprises the step of:
flattening the gain of the optical signals outputted from the second port of the circulator and the optical signals traveling in a reverse direction using a gain-flattening filter disposed between the circulator and the reflector.

10. The method of Claim 9, further comprising the step of:
amplifying optical signals outputted from the third port of the circulator.

11. The method of Claim 9, further comprising the step of:
amplifying optical signals outputted from or received on the second port of the circulator.

12. The method of one of Claims 9 to 11, arranged for operating the amplifier of one of Claims 1 to 8.
